# EUROPEAN PATENT APPLICATION

(11) **EP 3 200 139 A1**
(43) Date of publication of application: **02.08.2017**
(21) Application number: 17154277.2
(22) Date of filing: 01.02.2017
(51) Int. Cl.: G06Q 30/00

(54) **METHODS FOR IMPROVING AUTOMATED DAMAGE APPRAISAL AND DEVICES THEREOF**

(30) Priority: 01.02.2016 US 201662289720 P
(71) Applicant: Mitchell International, Inc., San Diego, CA 92122-5913 (US)
(72) Inventor: SULLIVAN, Beau, SAN DIEGO, CA California 92117 (US); NAYAK, Sunil, SAN DIEGO, CA California 92131 (US)
(74) Representative: Lualdi, Lorenzo

(57) **Abstract**

A method, non-transitory computer readable medium, and apparatus that improves automated damage appraisal includes analyzing one or more obtained images of property using a deep neural network with multiple hidden layers of units between an input and output and which has stored knowledge data encoded from one or more stored property damage images to identify which area of the property has damage. Damage data on an extent of the damage in the identified area of the property is determined using the deep neural network which has stored knowledge data encoded from one or more stored property damage images. The identified area of the property with the damage is mapped to one of a plurality of stored repair procedure templates to generate a list of one or more parts and one or more repair lines to make a repair. The generated data list for the identified area of the property with the damage is provided.

## Description

This application claims the benefit of U.S. Provisional Patent Application Serial No. 62/289,720, filed on February 1, 2016, which is hereby incorporated by reference in its entirety.

### FIELD

This technology generally relates to methods and devices for automated property damage appraisal and devices thereof.

### BACKGROUND

Prior software appraisal technologies for automating property damage appraisals which rely on user input and/or predictive analytics to represent damage severity have issues with their ability to consistently provide accurate damage assessments. Estimating is highly subjective and historical estimating data often contains bias and may not represent optimal or accurate information. Subsequently, predictive models which are statistically derived purely from historical data will perpetuate these inaccuracies.

Prior software appraisal technologies for automating property damage appraisals which employ deformation measurement methods of image analysis, such as photogrammetry, require highly specialized and costly instrumentation and technical training to operate. These prior technologies function by comparing specific instances of damaged property to undamaged examples of the same property to calculate the deformation. The requirement to create and maintain a comprehensive catalog of benchmark examples of undamaged property is inefficient and cost prohibitive at scale.

These limitations, inefficiencies, and inconsistencies with these prior software appraisal technologies result in substantial additional costs as well as inconsistencies and errors with automated property damage appraisals.

### SUMMARY

A method for improving automated damage appraisal through analysis, by an appraisal management computing apparatus, of one or more obtained images of property using a deep neural network with multiple hidden layers of units between an input and output, which has stored knowledge data encoded from one or more stored property damage images, to identify which area of the property has damage. Damage data on an extent of the damage in the identified area of the property is determined, by the appraisal management computing apparatus, using the deep neural network which has stored knowledge data encoded from one or more stored property damage images. The identified area of the property with the damage is mapped, by the appraisal management computing apparatus, to one of a plurality of stored repair procedure templates to generate a list of one or more parts and one or more repair lines to make a repair. The generated data list for the identified area of the property with the damage is provided by the appraisal management computing apparatus.

A non-transitory computer readable medium having stored thereon instructions for improving automated damage appraisal executable code which when executed by a processor, causes the processor to perform steps that include analyzing one or more obtained images of property using a deep neural network with multiple hidden layers of units between an input and output and which has stored knowledge data encoded from one or more stored property damage images to identify which area of the property has damage. Damage data on an extent of the damage in the identified area of the property is determined using the deep neural network which has stored knowledge data encoded from one or more stored property damage images. The identified area of the property with the damage is mapped to one of a plurality of stored repair procedure templates to generate a list of one or more parts and one or more repair lines to make a repair. The generated data list for the identified area of the property with the damage is provided.

A appraisal management computing apparatus comprising a memory coupled to a processor which is configured to be capable of executing programmed instructions stored in the memory to analyze one or more obtained images of property using a deep neural network with multiple hidden layers of units between an input and output and which has stored knowledge data encoded from one or more stored property damage images to identify which area of the property has damage. Damage data on an extent of the damage in the identified area of the property is determined using the deep neural network which has stored knowledge data encoded from one or more stored property damage images. The identified area of the property with the damage is mapped to one of a plurality of stored repair procedure templates to generate a list of one or more parts and one or more repair lines to make a repair. The generated data list for the identified area of the property with the damage is provided.

This technology provides a number of advantages including solving the above-noted issues incurred by prior software appraisal technologies through the use of deep neural networks (DNN). These deep neural networks may be created through supervised and semi-supervised machine learning training to perform image analysis which accurately and automatically qualifies images, detects vehicle damage, and identifies parts needing repair and then expertly applies authored vehicle repair procedure templates to confidently prescribe optimal repair procedures.

By way of example, this technology may receive as input one or more images, such as pictures and/or videos, depicting damaged property which are analyzed by a collection of deep neural networks to determine the extent of the damage. The deep neural networks may comprise stacked deep neural networks in which many hidden layers between the input and output layer allow the algorithm to use multiple processing layers composed of multiple linear and non-linear transformations. Individual deep neural networks are trained using semi-supervised machine learning techniques to recognize specific vehicle panel areas, damage severities and optimal repair operations using millions of example images and corresponding repair data representing the full spectrum of damage severities. These semi-supervised machine learning techniques ensure the data is labelled accurately and appropriately represents only optimal repair operations, thus ensuring the deep neural networks do not encode inaccurate and erroneous data known to exist in the historical estimating data sets.

Once each of the damaged panels have been identified, and the extent of the damage to each panel has been determined, the system invokes the appropriate vehicle and panel-specific repair procedure templates authored using manufacturer recommended repair procedures to generate the preliminary list of parts and repair operations required to restore the vehicle to manufacturer approved specifications. This repair operation list is analyzed using rules of adjacency to include any additional required repair operations and to remove unnecessary operations and refine the list. The repair operation list is then analyzed against similar historical repair estimates using prescriptive analytics to detect anomalies in parts or procedures which can be used to directly augment the repair operation list or presented as recommendations to the user depending on system configurations and preferences. Finally, the full set customer specific profile settings, which may include labor rates and part type utilization targets, is applied and calculated to accurately generate the complete list of optimal operations representing the final property damage repair estimate.

This technology is also capable of reviewing existing property damage estimate repair operation lists by analyzing the corresponding photos to determine if the repair procedures in the estimate are optimal and accurately reflect the damage in the photos, thus automating the estimate review process.

A method for improving an automated review of a damage appraisal includes obtaining, by an appraisal management computing apparatus, an initial generated data list for a previously prepared damage appraisal for a property. One or more images of the property associated with the prepared damage appraisal are analyzed, by an appraisal management computing apparatus, using a deep neural network with multiple hidden layers of units between an input and output which has knowledge encoded from vast quantities of earlier property damage images to identify which area of the property has damage. Damage data on an extent of the damage in the identified area of the property is determined, by the appraisal management computing apparatus, using the deep neural network which has knowledge encoded from vast quantities of earlier property damage images. The identified area of the property with the damage is mapped, by the appraisal management computing apparatus, to the appropriate labor operation to generate an automated list of one or more repair lines to make a repair. The initial generated data list for the previously prepared damage appraisal is compared, by the appraisal management computing apparatus, against the automatically generated data list to identify any differences. Any of the identified differences between the initial generated data list and the automatically generated data list is provided by the appraisal management computing apparatus.

A non-transitory computer readable medium having stored thereon instructions for improving an automated review of a damage appraisal executable code which when executed by a processor, causes the processor to perform steps that obtaining an initial generated data list for a previously prepared damage appraisal for a property. One or more images of the property associated with the prepared damage appraisal are analyzed using a deep neural network with multiple hidden layers of units between an input and output which has knowledge encoded from vast quantities of earlier property damage images to identify which area of the property has damage. Damage data on an extent of the damage in the identified area of the property is determined using the deep neural network which has knowledge encoded from vast quantities of earlier property damage images. The identified area of the property with the damage is mapped to the appropriate labor operation to generate an automated list of one or more repair lines to make a repair. The initial generated data list for the previously prepared damage appraisal is compared against the automatically generated data list to identify any differences. Any of the identified differences between the initial generated data list and the automatically generated data list is provided.

A appraisal management computing apparatus comprising a memory coupled to a processor which is configured to be capable of executing programmed instructions stored in the memory to obtain an initial generated data list for a previously prepared damage appraisal for a property. One or more images of the property associated with the prepared damage appraisal are analyzed using a deep neural network with multiple hidden layers of units between an input and output which has knowledge encoded from vast quantities of earlier property damage images to identify which area of the property has damage. Damage data on an extent of the damage in the identified area of the property is determined using the deep neural network which has knowledge encoded from vast quantities of earlier property damage images. The identified area of the property with the damage is mapped to the appropriate labor operation to generate an automated list of one or more repair lines to make a repair. The initial generated data list for the previously prepared damage appraisal is compared against the automatically generated data list to identify any differences. Any of the identified differences between the initial generated data list and the automatically generated data list is provided.

### BRIEF DESCRIPTION OF THE DRAWINGS

FIG. 1 is a block diagram of an environment with an example of an appraisal management computing apparatus that optimizes management of third party insurance claim processing;
FIG. 2 is a block diagram of the example of the appraisal management computing apparatus shown in FIG. 1;
FIG. 3 is a block diagram of another example of an appraisal management computing apparatus;
FIG. 4 is a flow chart of an example of a method for automated property damage appraisal;
FIG. 5 is a diagram of an example of a typical deep neural network showing multiple hidden layers
FIG 6. is a diagram of an example of a deep neural network showing multiple hidden layers illustrating examples of features represented within each of the hidden layers of a deep neural network trained to classify property damage;
FIGS. 7A and 7B are diagrams illustrating an example of deep artificial neural network machine learning experiment results of the identification of the part of the damaged property and of the repair or replace determination;
FIG. 8 is a diagram of an example of one of a plurality of repair procedure templates available for use by the appraisal management computing apparatus;
FIGS. 9A-9C are screenshots of an example of a user interface of the appraisal management computing apparatus depicting how mapping based on a template generates a list of one or more parts and one or more repair lines or other operations;
FIG. 10 is a screenshot of an example of a user interface of the appraisal management computing apparatus illustrating actionable items of an automated damage appraisal based on a deep neural network analysis;
FIG. 11 is a screenshot of an example of a user interface of the appraisal management computing apparatus illustrating a confidence determination with respect to a repair or replacement for one of the actionable items in FIG. 10 based on a deep neural network analysis;
FIG. 12 is a screenshot of an example of a user interface of the appraisal management computing apparatus illustrating recommendations generated from an analysis of historical data; and
FIG. 13 is a screenshot of an example of a user interface of the appraisal management computing apparatus illustrating a user interface depicting compliance results of calculations performed based on customer profile setting.

### DETAILED DESCRIPTION

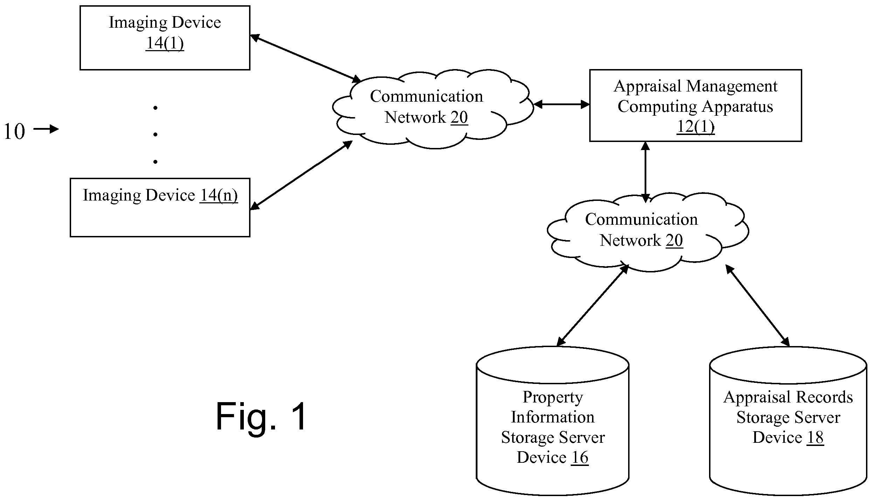

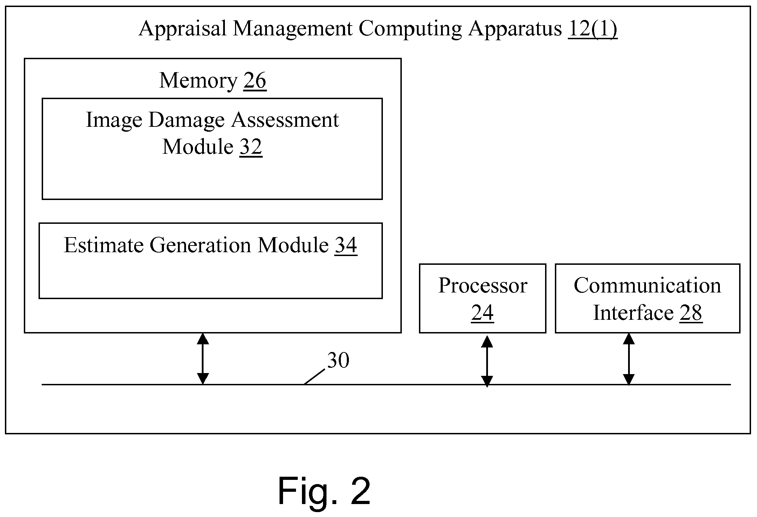

An environment 10 with an example of an appraisal management computing apparatus 12(1) is illustrated in FIGS. 1-2. In this particular example, the environment 10 includes the appraisal management computing apparatus 12(1), imaging devices 14(1)-14(n), property information storage server device 16, appraisal records storage server device 18 coupled via one or more communication networks 20, although the environment could include other types and numbers of systems, devices, components, and/or other elements as is generally known in the art and will not be illustrated or described herein. This technology provides a number of advantages including providing methods, non-transitory computer readable medium, and apparatuses for improving prior issues with automated damage appraisal.

In the illustrative examples illustrated and described herein, a deep neural network (DNN) is an artificial neural network (ANN) with multiple hidden layers of units between the input and output layers. A DNN can perform a number of different operations including by way of example modelling complex non-linear relationships for automated property damage appraisal. An artificial neural network (ANN) is an information processing paradigm that is inspired by the way biological nervous systems, such as the how the human brain, processes information. One of the elements of this paradigm is the novel structure of the information processing system. Repair procedure templates with respect to automated damage appraisals are meticulously curated vehicle year/make/model-specific collections of data about replacement parts and/or repair operations determined by certified vehicle repair experts and/or from manufacturer data, following vehicle manufacturer recommended repair procedures and guidelines, to be the necessary and optimal parts and operations required to repair a specified section of a damaged vehicle and restore it to manufacturer approved specifications and safety tolerances. Rules of adjacency with respect to automated damage appraisal comprise an expertly authored hierarchal rule structure that defines the relationships between collision repair operation types by identifying how a given specific collision repair operation necessarily requires, likely requires or relates to one or more additional specific collision repair operations. Semi-supervised machine learning with respect to automated damage appraisal is a class of supervised learning tasks and techniques that also make use of unlabeled data for training - typically a small amount of labeled data with a large amount of unlabeled data.

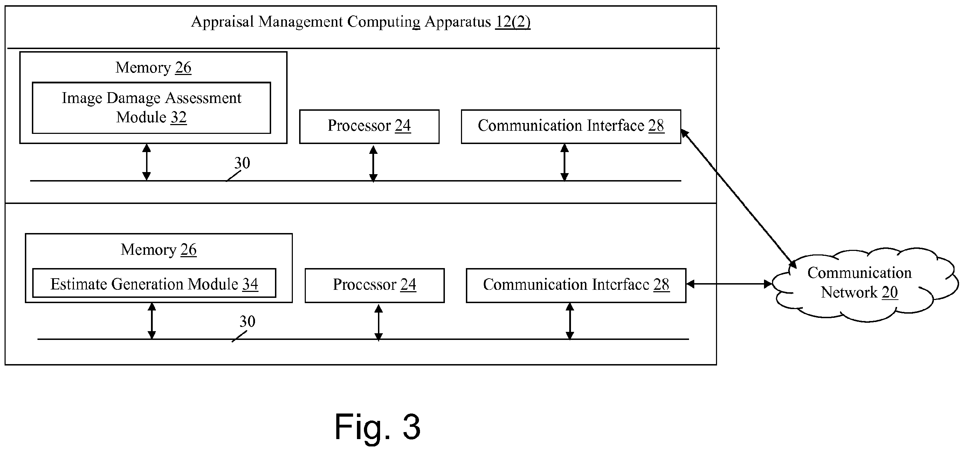

Referring more specifically to FIGS. 1-2, the appraisal management computing apparatus 12(1) is programmed to optimize prior automated damage appraisal as illustrated and described herein, although the apparatus can perform other types and/or numbers of functions or other operations and this technology can be utilized with other types of claims. In this particular example, the appraisal management computing apparatus 12(1) includes a processor 24, a memory 26, and a communication interface 28 which are coupled together by a bus 30, although the appraisal management computing apparatus 12(1) may include other types and/or numbers of physical and/or virtual systems, devices, components, and/or other elements in other configurations, such as the appraisal management computing apparatus 12(2) shown in FIG. 3 with distributed processing by way of example only.

The processor 24 in the appraisal management computing apparatus 12(1) may execute one or more programmed instructions stored in the memory 26 for improving automated damage appraisal as illustrated and described in the examples herein, although other types and numbers of functions and/or other operation can be performed. The processor 24 in the appraisal management computing apparatus 12(1) may include one or more central processing units and/or general purpose processors with one or more processing cores, for example.

The memory 26 in the appraisal management computing apparatus 12(1) stores the programmed instructions and other data for one or more aspects of the present technology as described and illustrated herein, although some or all of the programmed instructions could be stored and executed elsewhere. A variety of different types of memory storage devices, such as a random access memory (RAM) or a read only memory (ROM) in the system or a floppy disk, hard disk, CD ROM, DVD ROM, or other computer readable medium which is read from and written to by a magnetic, optical, or other reading and writing system that is coupled to the processor 24, can be used for the memory 26. In this particular example, the memory 26 includes an image damage assessment module 32 and an estimate generation application module 34, although the memory 26 can comprise other types and/or numbers of other modules, programmed instructions and/or data. Examples of the programmed instructions and steps of the image damage assessment module 32 and the estimate generation application module 34 are illustrated and described by way of the examples herein.

The communication interface 28 in the appraisal management computing apparatus 12(1) operatively couples and communicates between one or more of the imaging devices 14(1)-14(n) and one or more of the storage server devices 16(1)-16(n), which are all coupled together by one or more of the communication networks 20, although other types and numbers of communication networks or systems with other types and numbers of connections and configurations to other devices and elements. By way of example only, the communication networks 20 can use TCP/IP over Ethernet and industry-standard protocols, including NFS, CIFS, SOAP, XML, LDAP, SCSI, and SNMP, although other types and numbers of communication networks, can be used. The communication networks 20 in this example may employ any suitable interface mechanisms and network communication technologies, including, for example, any local area network, any wide area network (e.g., Internet), teletraffic in any suitable form (e.g., voice, modem, and the like), Public Switched Telephone Network (PSTNs), Ethernet-based Packet Data Networks (PDNs), and any combinations thereof and the like.

In this particular example, each of the imaging devices 14(1)-14(n) may capture and provide images, such as picture and/or videos by way of example only, of property to be appraised to the appraisal management computing apparatus 12(1), although the images can be obtained by the appraisal management computing apparatus 12(1) in other manners.

The property information storage server device 16 may store and provide requested information and/or other content, such as vehicle information, repair procedure templates, and/or owner data by way of example only, to the appraisal management computing apparatus 12(1) via one or more of the communication networks 20, for example, although other types and/or numbers of storage media in other configurations could be used. In this particular example, the property information storage server device 16 may comprise various combinations and types of storage hardware and/or software and represent a system with multiple network server devices in a data storage pool, which may include internal or external networks. Various network processing applications, such as CIFS applications, NFS applications, HTTP Web Network server device applications, and/or FTP applications, may be operating on the property information storage server device 16 and may transmit data (e.g., files or web pages) in response to requests from the appraisal management computing apparatus 12(1).

The appraisal records storage server device 18 may store and provide requested information and content, such as records and/or other data related to prior appraisals by way of example only, to the appraisal management computing apparatus 12(1) via one or more of the communication networks 20, for example, although other types and numbers of storage media in other configurations could be used. In this particular example, the appraisal records storage server device 18 may comprise various combinations and types of storage hardware and/or software and represent a system with multiple network server devices in a data storage pool, which may include internal or external networks. Various network processing applications, such as CIFS applications, NFS applications, HTTP Web Network server device applications, and/or FTP applications, may be operating on the property information storage server device 16 and may transmit data (e.g., files or web pages) in response to requests from the appraisal management computing apparatus 12(1).

An alternative example of the appraisal management computing apparatus 12(2) is shown in FIG. 3. The appraisal management computing apparatus 12(2) is the same in structure and operation as the appraisal management computing apparatus 12(1), except as illustrated and described herein. In this particular example, the processing is distributed amount multiple physical processors 24 in the appraisal management computing apparatus 12(2) each configured to execute a different one of the image damage assessment module 32 and the estimate generation application module 34 and communicating via a network application program interface (API), although modules and/or programmed instructions can be executed in and/or interacted and controlled other manners and/or configurations, such as by one or more different or the same computing devices with one or more physical processors, and/or one or more virtual processors.

Each of the imaging devices 14(1)-14(n), the property information storage server device 16, and the appraisal records storage server device 18 may include a processor, a memory, and a communication interface, which are coupled together by a bus or other link, although other type and/or numbers of other devices and/or nodes as well as other network elements could be used.

Although the exemplary network environment 10 with the appraisal management computing apparatus 12(1), the imaging devices 14(1)-14(n), the property information storage server device 16, the appraisal records storage server device 18, and the communication networks 20 are described and illustrated herein, other types and numbers of systems, devices, components, and/or elements in other topologies can be used. It is to be understood that the systems of the examples described herein are for exemplary purposes, as many variations of the specific hardware and software used to implement the examples are possible, as will be appreciated by those skilled in the relevant art(s).

In addition, two or more computing systems or devices can be substituted for any one of the systems or devices in any example. Accordingly, principles and advantages of distributed processing, such as redundancy and replication also can be implemented, as desired, to increase the robustness and performance of the devices, apparatuses, and systems of the examples. The examples may also be implemented on computer system(s) that extend across any suitable network using any suitable interface mechanisms and traffic technologies, including by way of example only teletraffic in any suitable form (e.g., voice and modem), wireless traffic media, wireless traffic networks, cellular traffic networks, G3 traffic networks, Public Switched Telephone Network (PSTNs), Packet Data Networks (PDNs), the Internet, intranets, and combinations thereof.

The examples also may be embodied as a non-transitory computer readable medium having instructions stored thereon for one or more aspects of the present technology as described and illustrated by way of the examples herein, as described herein, which when executed by the processor, cause the processor to carry out the steps necessary to implement the methods of this technology as described and illustrated with the examples herein.

An example of a method for improving automated damage appraisal and devices thereof will now be described with reference to FIGS. 1-13, although this technology can be used in the same manner for other types of applications, such as using the same process that is illustrated and described by way of the examples herein to review existing property damage estimate repair operation data lists by analyzing the corresponding photos to determine if the repair procedures in the estimate data are optimal and accurately reflect the damage in the photos, thus automating the estimate review process.

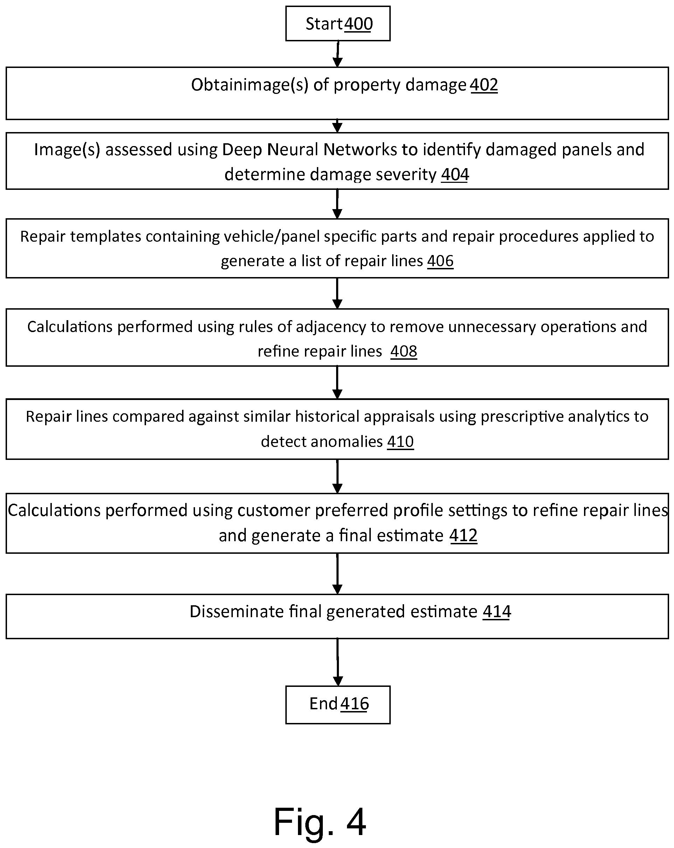

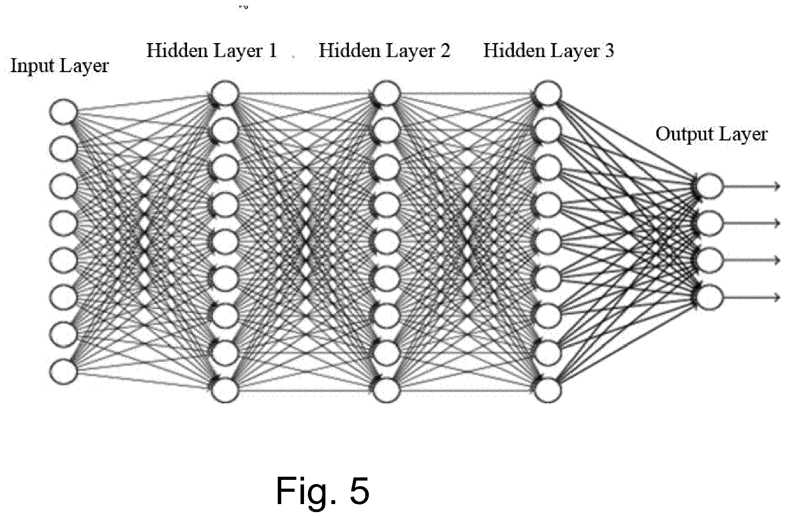

Referring more specifically to FIG. 4, in step 400 in this example of the method may start and then one or more of the imaging devices 14(1)-14(n) may be used to capture a number of images, such as pictures and/or videos, of property, such as a vehicle by way of example only as illustrated by way of example in FIG. 5, requested by the appraisal management computing apparatus 12(1), although the images can be obtained in other manners and the specified types and/or numbers of images can be set in other manners. By way of example only, the images may be captured by an insured/claimant or a low cost resource, such as a drone, using one of the imaging devices 14(1)-14(n). Additionally and by way of example only, the captured images, such as pictures and/or videos, may be captured using a camera or equipped mobile device as one of the imaging devices 14(1)-14(n) or a three dimensional (3D) scan generated using a scanner or other equipped mobile device as one of the imaging devices 14(1)-14(n), although other types of imaging of the property can be used.

Next, in step 402 the appraisal management computing apparatus 12(1) may obtain one or more the captured images from one of the imaging devices 14(1)-14(n) via an internet connection or other communication network 20, although the appraisal management computing apparatus 12(1) can obtain the necessary images in other manners. Additionally, the appraisal management computing apparatus 12(1) may receive or otherwise obtain other data relating to the property to be appraised for damage, such as a vehicle identification number (VIN) of the vehicle to use as an identifier (ID) of the property, a year and a make, and/or model of the vehicle by way of example only from a received data input from a user computing device or other device used by the insured/claimant coupled to the appraisal management computing apparatus 12(1), although this data can be obtained in other manners, such as by requesting and receiving identifier and other vehicle data from the property information storage server device 16 and/or by utilizing image recognition software to scan and retrieve the data from the one or more obtained images of the property, and/or from other sources in other manners.

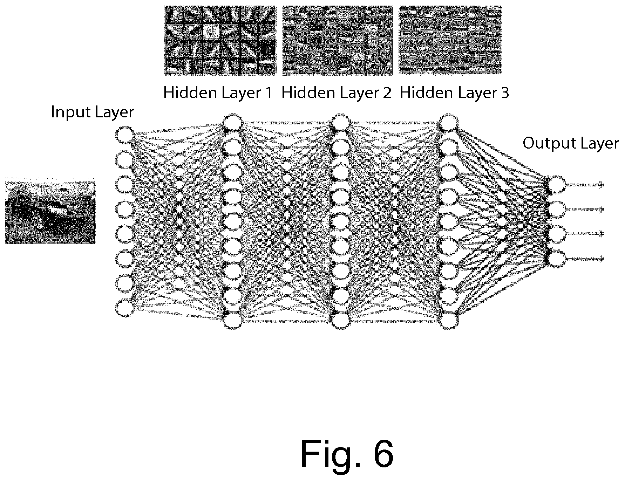

Next in step 404, the appraisal management computing apparatus 12(1) may perform one or more assessments on the one or more obtained images, such as pictures by way of example only, and/or one or more dynamic images, such as video by way of example only, for determining an automated property damage appraisal using a deep neural network (DNN) based on stored programmed instructions, such as in the image damage assessment module 32 by way of example only. A functional diagram of the operation of the deep neural network (DNN) during automated damage appraisal is illustrated by way of example only in FIG. 6.

As illustrated by way of example only in FIG. 6, this deep neural network (DNN) in the image damage assessment module 32 executed by the appraisal management computing apparatus 12(1) may comprise stacked deep neural networks in which many hidden layers between the input and output layer use multiple processing layers composed of multiple linear and/or non-linear transformations for aspects of automated damage appraisal as illustrated and described by way of the examples herein. Additionally, the deep neural network (DNN) executed by the appraisal management computing apparatus 12(1) in this example has a structure and synaptic weights trained using semi-supervised machine learning techniques in conjunction with labelled and unlabeled data to encode knowledge obtained from earlier property information data images stored and retrieved as needed from the property information storage server device 16. This deep neural network (DNN) executed by the appraisal management computing apparatus 12(1) in this example provides significantly more effective and cost efficient assessments for automated property damage appraisals than is possible with a simple neural network.

Next, the deep neural network (DNN) executed by the appraisal management computing apparatus 12(1) may determine when the images are relevant to the identified damaged property based on analyzed classifications and confidences of the one or more obtained images when compared to correlated stored images for the same type of property that are above one or more configured and stored thresholds, although other manners for qualifying the one or more images and other types of automated damage analysis may be executed at the same time or separately. Any of the one or more analyzed images that are not of the correct vehicle for damage appraisal are not qualified and may be ignored by the subsequent automated damage appraisal process executed by the appraisal management computing apparatus 12(1).

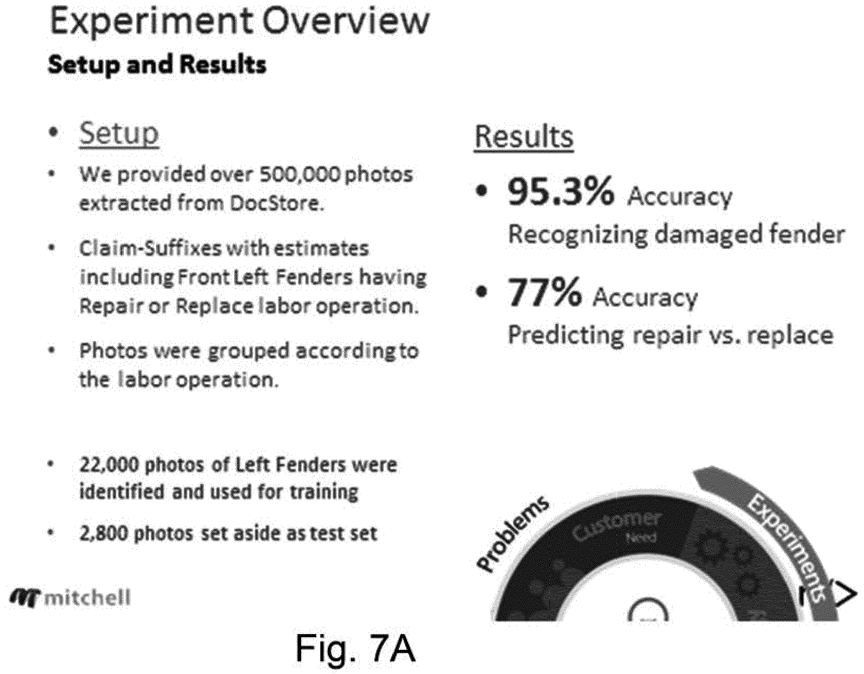

Next, the deep neural network (DNN) executed by the appraisal management computing apparatus 12(1) may analyze each of the one or more qualified images to identify the one or more areas of the property being assessed for the appraisal,, although other manners for the one or more areas of the property being assessed and other types of automated damage analysis may be executed at the same time or separately. For example, as illustrated in FIG. 7A, the deep neural network (DNN) executed by the appraisal management computing apparatus 12(1) is able to analyze and identify that the one or more qualified images are of the front left fender of a vehicle, although other manners for identifying the area of damage and other types of property could be assessed.

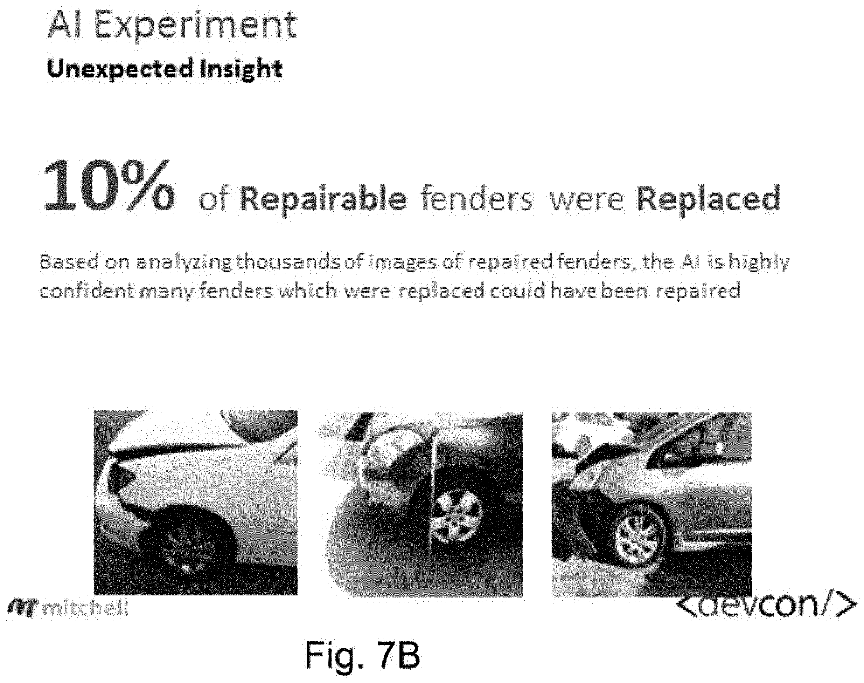

Next, the deep neural network (DNN) executed by the appraisal management computing apparatus 12(1) may analyze to determine if any of the identified images depict any damage and the extent of the damage, although other manners for determining if any of the one or more images depict any damage and the extent of the damage and other types of automated damage analysis may be executed at the same time or separately. By way of example only for a damaged vehicle, the appraisal management computing apparatus 12(1) may analyze each of the qualified images using a deep neural network (DNN) to determine if the images depict damage. In this example, the deep neural network (DNN) executed by the appraisal management computing apparatus 12(1) based on assessed classifications and confidences in the identified images above one or more corresponding configured stored threshold may identify damage and determine the extent of the damage, although other manners for automated identifying damage and the extent of the damage may be used. By way of example only, a diagram illustrating the identification and determination of the extent of damage, including a repair or replace analysis by using the deep neural network (DNN) executed by the appraisal management computing apparatus 12(1) is illustrated in FIG. 7B. Unlike prior software appraisal technologies for automating property damage appraisals, by using the deep neural network (DNN) executed by the appraisal management computing apparatus 12(1), highly specialized and costly instrumentation and technical training to operate as well as the creation and maintenance of a comprehensive catalog of benchmark examples of undamaged property are not required.

Next, in step 406 the deep neural network (DNN) executed by the appraisal management computing apparatus 12(1) may map the area of the property, in this example part of the damaged vehicle to one or more of the major body panels on one of a plurality of stored repair procedure templates in the property information storage server device 16 correlated to that damaged vehicle type. Additionally, based on the mapping the appraisal management computing apparatus 12(1) may determine one or more of a plurality of parts and/or one or more of a plurality of stored repair lines, such as labor operations for the repair or replacement by way of example, based on the mapped damage. Next, the estimate generation module 34 of the appraisal management computing apparatus 12(1) may generate initial automated appraisal data which may include the identity of the property, a list of major area or areas of the property which have sustained damage, the extent of the damage sustained in each area based on the analysis by the deep neural network, and a generated list of one or more parts and/or one or more repair lines based on the mapping to the corresponding one of the plurality of repair procedure templates and related data, although other types and/or amounts of automated damage appraisal information from could be generated and output in other manners.

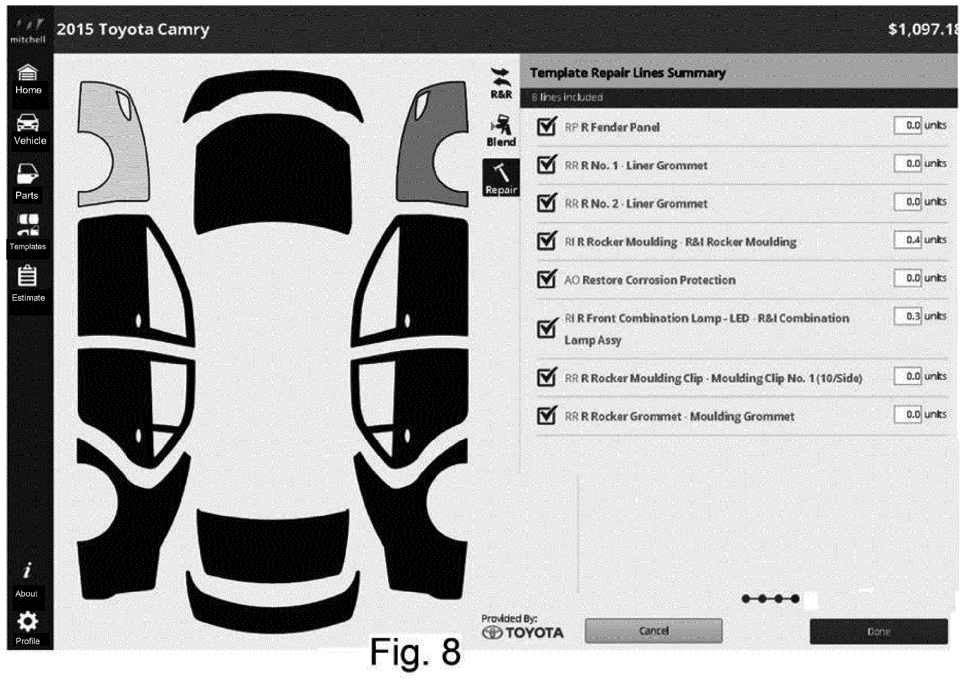

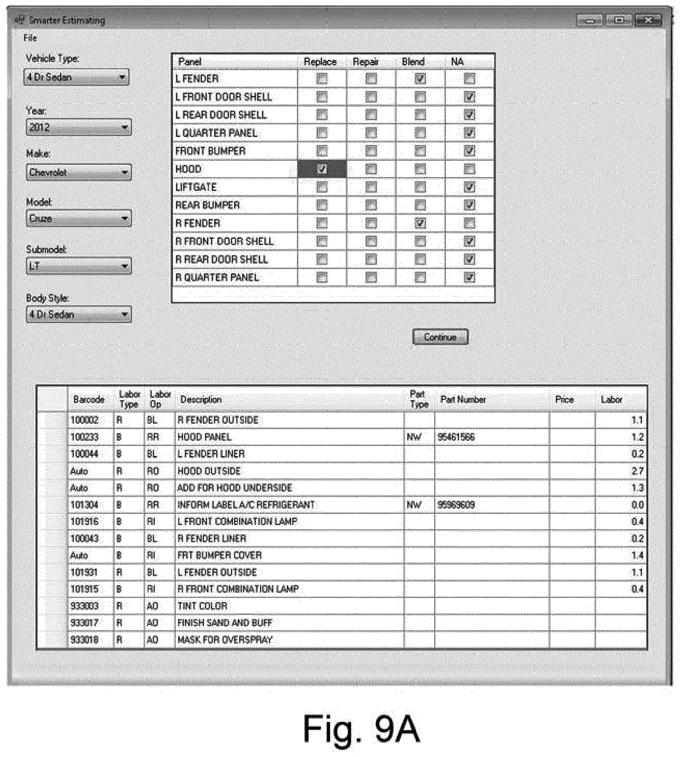

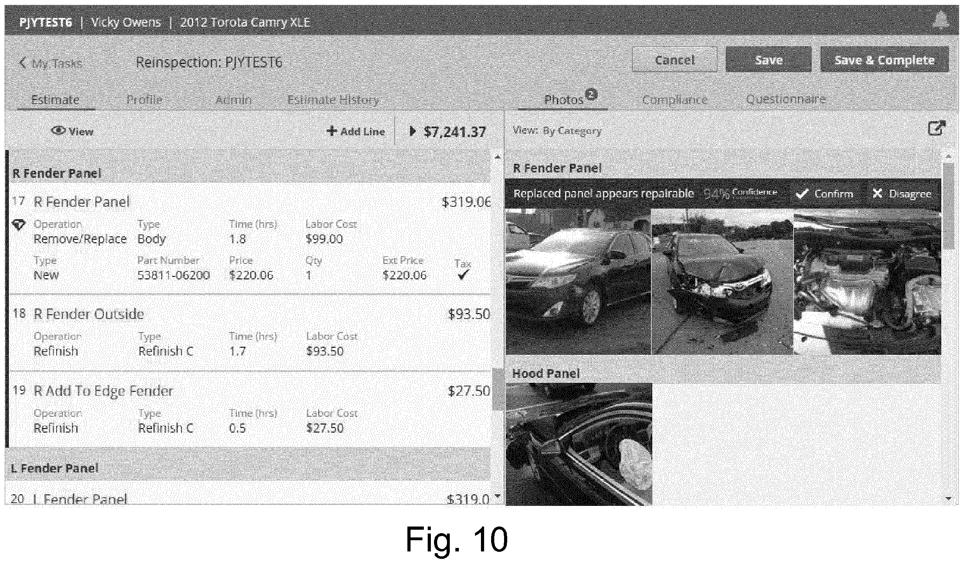

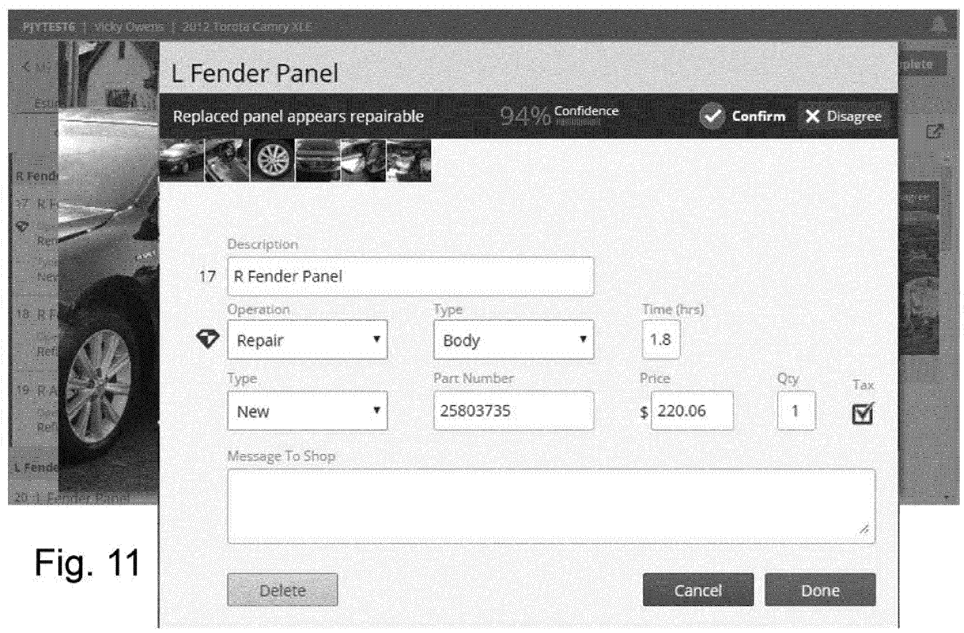

By way of example only with respect to the example above, an illustration of a stored template for body panels for a Toyota Camry 2015 is shown in FIG. 8. In this example the information storage server device 16 may have the associated stored one or more parts and one or more repair lines for each body panel which is accessible by the appraisal management computing apparatus 12(1) based on the mapping. Additionally, by way of example, FIGS. 9A-9C are screenshots of a user interface of the appraisal management computing apparatus 12(1) depicting how mapping based on a template generates a list of one or more parts and one or more repair lines or other operations. Further by way of example, in FIG. 10 a user interface of the appraisal management computing apparatus with actionable items of an automated damage appraisal based on a deep neural network analysis is illustrated. Even further by way of example, in FIG. 11 another user interface of the appraisal management computing apparatus with a confidence determination with respect to a repair or replacement for one of the actionable items from FIG. 10 based on a deep neural network analysis by the appraisal management computing apparatus 12(1) is illustrated.

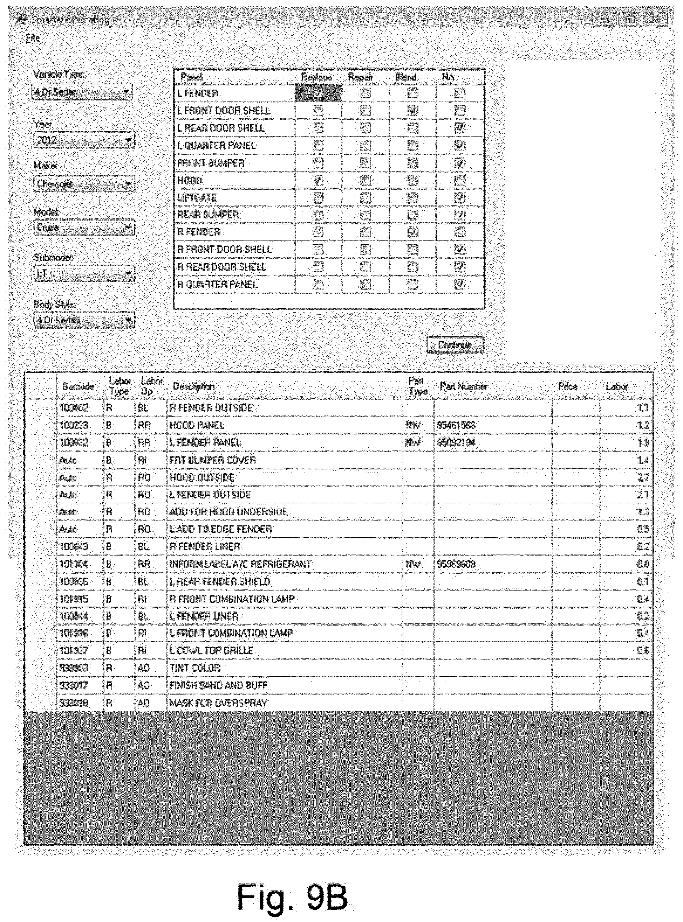

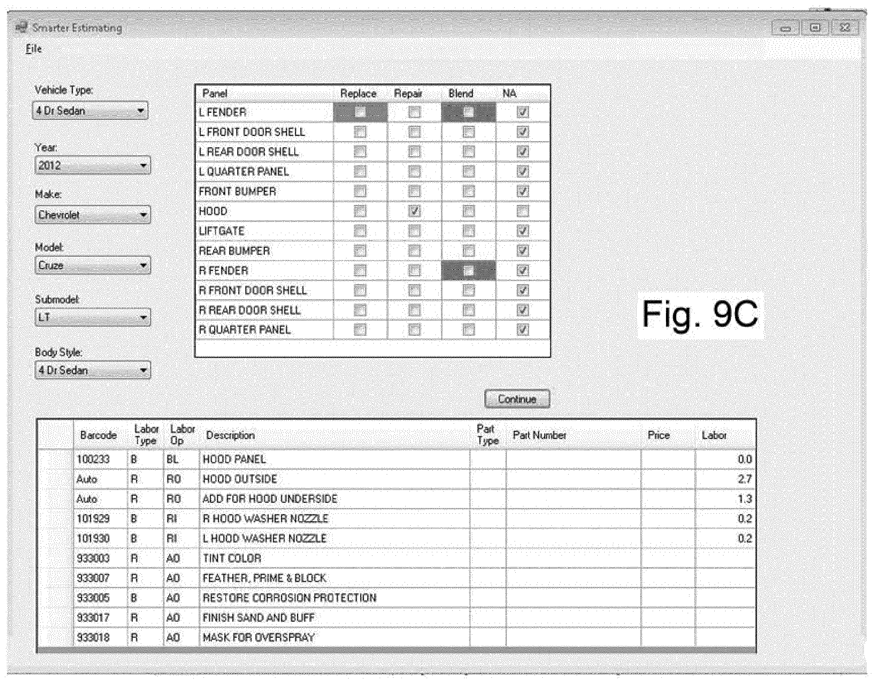

In step 408, the estimate generation module 34 of the appraisal management computing apparatus 12(1) may perform one or more calculations using rules of adjacency on the initial automated appraisal data to for example add, remove or refine one or more parts and/or repair lines. Rules of Adjacency with respect to automated damage appraisal comprise an expertly authored hierarchal rule structure that defines the relationships between collision repair operation types by identifying how a given specific collision repair operation necessarily requires, likely requires or relates to one or more additional specific collision repair operations. By way of example only, FIG 9A depicts one possible user interface showing an example automated application of rules of adjacency in which a Hood determined to require a repair operation of type Replace, shown by the checked box, will necessitate the L Fender and R Fender to require a repair operation of type Blend, shown by the checked box, based on rules of adjacency. Additionally, by way of example, FIG 9B depicts a user interface showing an example application of rules of adjacency in which a L Fender determined to require a repair operation of Replace, shown by the checked box, will necessitate the L Front Door Shell to require a repair operation of type Blend, shown by the checked box, based on rules of adjacency. Further by way of example, in FIG 9C, a Hood determined to require a repair operation of type Repair, shown by the checked box, may or may not necessitate the L Fender and/or the R Fender to require a repair operation of type Blend, shown by the yellow highlighted unchecked box, depending on the location and extent of the damage to the hood, based on rules of adjacency.

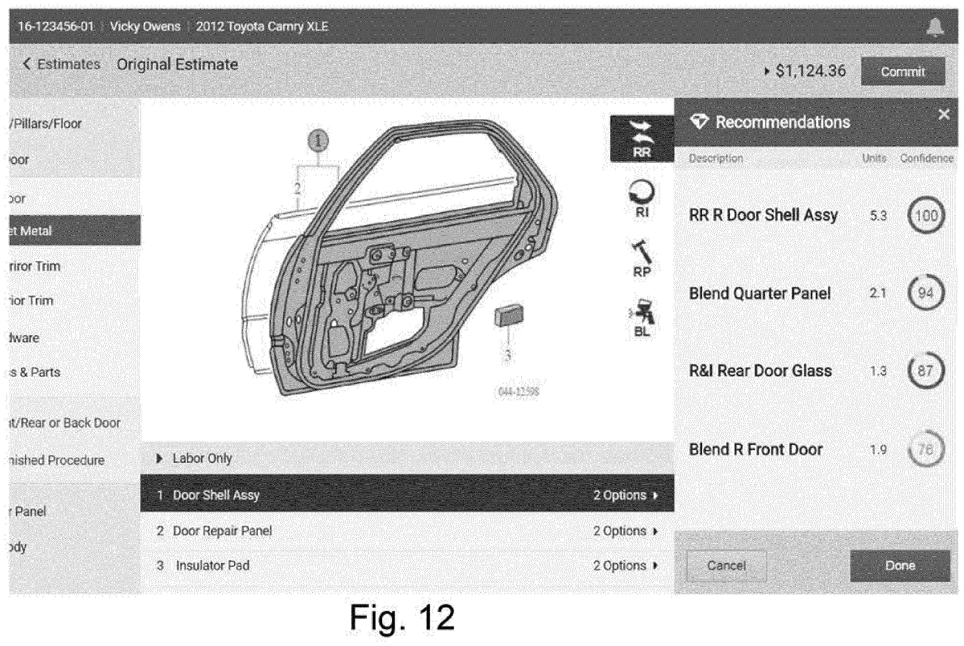

In step 410, the estimation generation module 34 in the appraisal management computing apparatus 12(1) may perform calculations using prescriptive analytics based on historical analytics on the updated generated list of one or more parts and/or one or more repair lines to generate a further updated list of one or more parts and/or one or more repair lines, although the prescriptive analytics may be applied to other parts of the automated damage appraisal. By way of example, the appraisal management computing apparatus 12(1) may compare the updated generated list of one or more parts and/or one or more repair lines against historical appraisal data retrieved from the appraisal records storage server device 18 for a similar repair or replacement of damage. Based on the comparison, the appraisal management computing apparatus 12(1) may automatically add, change, and/or remove a one or more parts and/or one or more repair lines to produce a further updated list of one or more parts and/or one or more repair lines. By way of further example only for a damaged vehicle, based on the historical review analysis the appraisal management computing apparatus 12(1) may add a repair line to blend panels adjacent to one of those being repaired or replaced based on the comparison and analysis resulting in a more accurate automated damage appraisal. A screenshot of an example of a user interface of the appraisal management computing apparatus illustrating recommendations generated from an analysis of historical data is illustrated in FIG. 12.

In step 412, the estimation generation module 34 in the appraisal management computing apparatus 12(1) may perform further calculations using one of a plurality of stored customer profile settings to further refine the updated list of one or more parts and/or one or more repair lines based on one or more customer requirements and/or preferences, although other types of refining calculations may be applied. By way of example, based on the stored customer profile setting, the estimate generation module 34 may automatically add, change, and/or remove a part or parts and/or repair lines to account for overlapping labor operations performed on nearby or adjacent parts, as well as apply specific labor rate and tax rule profiles to accommodate various geographically relevant laws and/or business rules, to produce a final estimate. By way of further example only for a damaged vehicle, based on the rules and data contained in the estimate profile corresponding to specific state or county, the appraisal management computing apparatus 12(1) may use body repair labor rates of a particular rate per hour and may add a hazardous materials disposal fee, although other types of customer profile settings may be applied.

In step 414 the appraisal management computing apparatus 12(1) may disseminate the final generated estimate for the automated damage appraisal and then this example of the method may end in step 416.

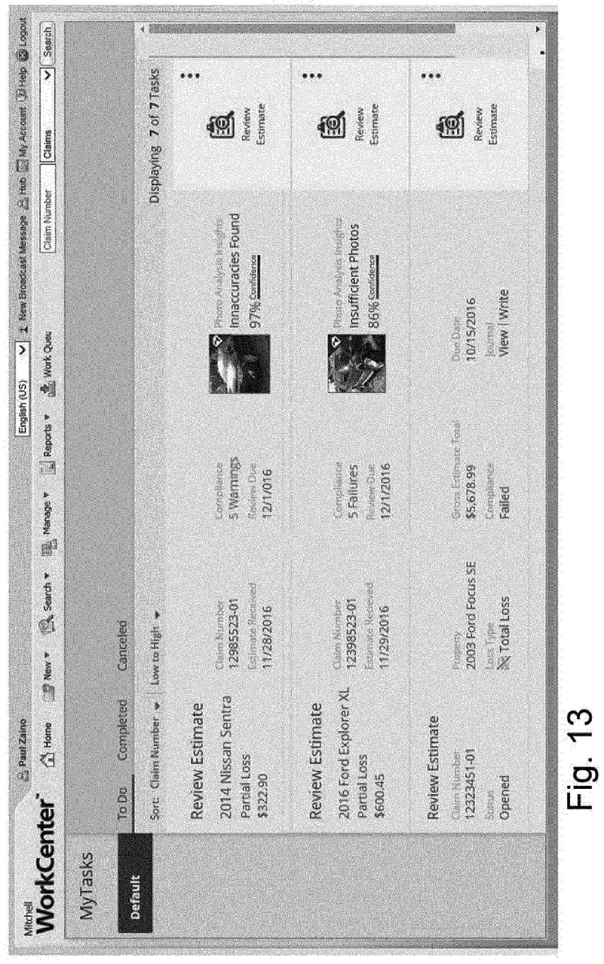

This technology also may be utilized in other manners and approaches. For example, this method for improving automated damage appraisal and devices may be used to provide an automated review of completed appraisals to identify and correct errors and provide enhanced consistency of appraisal results. By way of example only, FIG. 13 is a screenshot of an example user interface depicting results from an automated review of a completed appraisal indicating errors and inaccuracies detected by the appraisal management computing apparatus.

Accordingly, as illustrated and described by way of the examples herein, this technology significantly improves the efficiency and accuracy of automated damage appraisal methods. This automated technology may use images or videos of the damage (received electronically from an insured/claimant, low cost resource or other methods ex. remotely controlled drone) to automatically create an appraisal which will drastically reduce the time it takes to assess the damage and estimate the cost of the repair. In addition to increasing the efficiency of this process, the accuracy and precision achieved using this automated technology will continue to increase since the automated technology will not suffer from the bias, subjectivity and variances in skill of manual appraisal techniques, but will improve its accuracy over time by leveraging validated results as feedback to further refine subsequent iterations.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations therefore, is not intended to limit the claimed processes to any order except as may be specified in the claims. Accordingly, the invention is limited only by the following claims and equivalents thereto.

## Claims

1. A method for improving automated damage appraisal, the method comprising:
analyzing, by an appraisal management computing apparatus, one or more obtained images of property using a deep neural network with multiple hidden layers of units between an input and output and which has stored knowledge data encoded from one or more stored property damage images to identify which area of the property has damage;
determining, by the appraisal management computing apparatus, damage data on an extent of the damage in the identified area of the property using the deep neural network which has stored knowledge data encoded from one or more stored property damage images;
mapping, by the appraisal management computing apparatus, the identified area of the property with the damage to one of a plurality of stored repair procedure templates to generate a list of one or more parts and one or more repair lines to make a repair; and
providing, by the appraisal management computing apparatus, the generated data list for the identified area of the property with the damage.

2. The method as set forth in claim 1 wherein the analyzing the one or more images of the property further comprises:
qualifying, by the appraisal management computing apparatus, the one or more images to eliminate any which are not of the property; and
determining, by the appraisal management computing apparatus, which of the qualified images of the property depict damage;
wherein the analyzing analyzes the one or more qualified images of the property which depict using the deep neural network which has stored knowledge data encoded from one or more stored property damage images to identify which area of the property has damage.

3. The method as set forth in claim 1 further comprising:
performing, by the appraisal management computing apparatus, one or more calculations using rules of adjacency to add any of the one or more parts or the one or more repair lines to make the repair in the generated data list determined to be additionally required; and
adjusting, by the appraisal management computing apparatus, the generated data list based on any of the one or more parts or the one or more repair lines the performed one or more calculations using rules of adjacency indicated should be removed.

4. The method as set forth in claim 1 further comprising:
utilizing, by the appraisal management computing apparatus, prescriptive analytics and statistical models of historical stored repair data for the identified area of the property with the damage to detect any one or more anomalies in the generated data list of the one or more parts and the one or more repair lines to make the repair against; and
adjusting, by the appraisal management computing apparatus, the generated data list based on any of the detected one or more anomalies.

5. The method as set forth in claim 1 further comprising:
performing, by the appraisal management computing apparatus, one or more calculations using a stored customer profile setting to adjust any of the one or more parts or the one or more repair lines to make the repair in the generated data list determined to the stored customer profile setting; and
adjusting, by the appraisal management computing apparatus, the generated data list based on any of the one or more parts or the one or more repair lines the performed one or more calculations using the stored customer profile indicated the adjustment was required.

6. The method as set forth in claim 1 further comprising obtaining, by the appraisal management computing apparatus, identification data and property information data for the property, wherein the analyzing the one or more images, the determining the damage data and the mapping the identified area of the property with the damage are further based on the identification data and the property information data for the property.

7. The method as set forth in claim 1 wherein the providing further comprises providing, by the appraisal management computing apparatus, the identity of the property, an identification of one or more areas of the property which have sustained the damage, and the determined damage data on the extent of the damage sustained in each of the one or more areas.

8. The method as set forth in claim 1 further comprising retrieving, by the appraisal management computing apparatus, the one or more images or videos of the property from an imaging device.

9. A non-transitory computer readable medium having stored thereon instructions for improving automated damage appraisal executable code which when executed by a processor, causes the processor to perform steps that comprising:
analyzing one or more obtained images of property using a deep neural network with multiple hidden layers of units between an input and output and which has stored knowledge data encoded from one or more stored property damage images to identify which area of the property has damage;
determining damage data on an extent of the damage in the identified area of the property using the deep neural network which has stored knowledge data encoded from one or more stored property damage images;
mapping the identified area of the property with the damage to one of a plurality of stored repair procedure templates to generate a list of one or more parts and one or more repair procedure lines to make a repair; and
providing the generated data list for the identified area of the property with the damage.

10. The medium as set forth in claim 9 wherein the analyzing the one or more images of the property further comprises:
qualifying the one or more images to eliminate any which are not of the property; and
determining which of the qualified images of the property depict damage;
wherein the analyzing analyzes the one or more qualified images of the property which depict analyzing one or more images of property using the deep neural network which has stored knowledge data encoded from one or more stored property damage images to identify which area of the property has damage.

11. The medium as set forth in claim 9 further comprising:
performing one or more calculations using rules of adjacency to add any of the one or more parts or the one or more repair lines to make the repair in the generated data list determined to additionally required; and
adjusting the generated data list based on any of the one or more parts or the one or more repair lines the performed one or more calculations using rules of adjacency indicated should be removed.

12. The medium as set forth in claim 9 further comprising:
utilizing prescriptive analytics and statistical models of historical stored repair data for the identified area of the property with the damage to detect any one or more anomalies in the generated data list of the one or more parts and the one or more repair lines to make the repair against; and
adjusting the generated data list based on any of the detected one or more anomalies.

13. The medium as set forth in claim 9 further comprising:
performing one or more calculations using a stored customer profile setting to adjust any of the one or more parts or the one or more repair lines to make the repair in the generated data list determined to the stored customer profile setting; and
adjusting the generated data list based on any of the one or more parts or the one or more repair lines the performed one or more calculations using the stored customer profile indicated the adjustment was required.

14. The medium as set forth in claim 9 further comprising obtaining identification data and property information data for the property, wherein the analyzing the one or more images, the determining the damage data and the mapping the identified area of the property with the damage are further based on the identification data and the property information data for the property.

15. The medium as set forth in claim 9 wherein the providing further comprises providing the identity of the property, an identification of one or more areas of the property which have sustained the damage, and the determined damage data on the extent of the damage sustained in each of the one or more areas.

16. The medium as set forth in claim 9 further comprising retrieving the one or more images or videos of the property from an imaging device.

17. A appraisal management computing apparatus comprising:
a processor; and
a memory coupled to the processor which is configured to be capable of executing programmed instructions stored in the memory to:
analyze one or more obtained images of property using a deep neural network with multiple hidden layers of units between an input and output and which has stored knowledge data encoded from one or more stored property damage images to identify which area of the property has damage to identify which area of the property has damage;
determine damage data on an extent of the damage in the identified area of the property using the deep neural network which has stored knowledge data encoded from one or more stored property damage images
map the identified area of the property with the damage to one of a plurality of stored repair procedure templates to generate a list of one or more parts and one or more repair procedure lines to make a repair; and
provide the generated data list for the identified area of the property with the damage.

18. The apparatus as set forth in claim 17 wherein the processor coupled to the memory is further configured to be capable of executing at least one additional programmed instruction for the analyzing the one or more images stored in the memory to:
qualify the one or more images to eliminate any which are not of the property; and
determine which of the qualified images of the property depict damage;
wherein the analyzing analyzes the one or more qualified images of the property which depict using the deep neural network which has stored knowledge data encoded from one or more stored property damage images to identify which area of the property has damage.

19. The apparatus as set forth in claim 17 wherein the processor coupled to the memory is further configured to be capable of executing at least one additional programmed instruction for the analyzing the one or more images stored in the memory to:
perform one or more calculations using rules of adjacency to add any of the one or more parts or the one or more repair lines to make the repair in the generated data list determined to be additionally required; and
adjust the generated data list based on any of the one or more parts or the one or more repair lines the performed one or more calculations using rules of adjacency indicated should be removed.

20. The apparatus as set forth in claim 17 wherein the processor coupled to the memory is further configured to be capable of executing at least one additional programmed instruction for the analyzing the one or more images stored in the memory to:
utilize prescriptive analytics and statistical models of historical stored repair data for the identified area of the property with the damage to detect any one or more anomalies in the generated data list of the one or more parts and the one or more repair lines to make the repair against; and
adjust the generated data list based on any of the detected one or more anomalies.

21. The apparatus as set forth in claim 17 wherein the processor coupled to the memory is further configured to be capable of executing at least one additional programmed instruction for the analyzing the one or more images stored in the memory to:
perform one or more calculations using a stored customer profile setting to adjust any of the one or more parts or the one or more repair lines to make the repair in the generated data list determined to the stored customer profile setting; and
adjust the generated data list based on any of the one or more parts or the one or more repair lines the performed one or more calculations using the stored customer profile indicated the adjustment was required.

22. The apparatus as set forth in claim 17 wherein the processor coupled to the memory is further configured to be capable of executing at least one additional programmed instruction stored in the memory to obtain identification data and property information data for the property, wherein the analyzing the one or more images, the determining the damage data and the mapping the identified area of the property with the damage are further based on the identification data and the property information data for the property.

23. The apparatus as set forth in claim 17 wherein the processor coupled to the memory is further configured to be capable of executing at least one additional programmed instruction for the providing stored in the memory to provide the identity of the property, an identification of one or more areas of the property which have sustained the damage, and the determined damage data on the extent of the damage sustained in each of the one or more areas.

24. The apparatus as set forth in claim 17 wherein the processor coupled to the memory is further configured to be capable of executing at least one additional programmed instruction stored in the memory to retrieve the one or more images of the property from an imaging device.

25. A method for improving an automated review of a damage appraisal, the method comprising:
obtaining, by an appraisal management computing apparatus, an initial generated data list for a previously prepared damage appraisal for a property;
analyzing, by an appraisal management computing apparatus, one or more images of the property associated with the prepared damage appraisal using a deep neural network with multiple hidden layers of units between an input and output which has knowledge encoded from vast quantities of earlier property damage images to identify which area of the property has damage;
determining, by the appraisal management computing apparatus, damage data on an extent of the damage in the identified area of the property using an deep neural network which has knowledge encoded from vast quantities of earlier property damage images;
mapping, by the appraisal management computing apparatus, the identified area of the property with the damage to the appropriate labor operation to generate an automated list of one or more repair lines to make a repair;
comparing, by the appraisal management computing apparatus, the initial generated data list for the previously prepared damage appraisal against the automatically generated data list to identify any differences; and
providing, by the appraisal management computing apparatus, any of the identified differences between the initial generated data list and the automatically generated data list.

26. The method as set forth in claim 25 wherein the analyzing the one or more images of the property further comprises:
qualifying, by the appraisal management computing apparatus, the one or more images to eliminate any which are not of the property; and
determining, by the appraisal management computing apparatus, which of the qualified images of the property depict damage;
wherein the analyzing analyzes the one or more qualified images of the property which depict using the deep neural network which has stored knowledge data encoded from one or more stored property damage images to identify which area of the property has damage.

27. The method as set forth in claim 25 further comprising:
performing, by the appraisal management computing apparatus, one or more calculations using rules of adjacency to add any of the one or more parts or the one or more repair lines to make the repair in the generated data list determined to be additionally required; and
adjusting, by the appraisal management computing apparatus, the generated data list based on any of the one or more parts or the one or more repair lines the performed one or more calculations using rules of adjacency indicated should be removed.

28. The method as set forth in claim 25 further comprising:
utilizing, by the appraisal management computing apparatus, prescriptive analytics and statistical models of historical stored repair data for the identified area of the property with the damage to detect any one or more anomalies in the generated data list of the one or more parts and the one or more repair lines to make the repair against; and
adjusting, by the appraisal management computing apparatus, the generated data list based on any of the detected one or more anomalies.

29. The method as set forth in claim 25 further comprising:
performing, by the appraisal management computing apparatus, one or more calculations using a stored customer profile setting to adjust any of the one or more parts or the one or more repair lines to make the repair in the generated data list determined to the stored customer profile setting; and
adjusting, by the appraisal management computing apparatus, the generated data list based on any of the one or more parts or the one or more repair lines the performed one or more calculations using the stored customer profile indicated the adjustment was required.

30. The method as set forth in claim 25 further comprising obtaining, by the appraisal management computing apparatus, identification data and property information data for the property, wherein the analyzing the one or more images, the determining the damage data and the mapping the identified area of the property with the damage are further based on the identification data and the property information data for the property.

31. The method as set forth in claim 25 wherein the providing further comprises providing, by the appraisal management computing apparatus, the identity of the property, an identification of one or more areas of the property which have sustained the damage, and the determined damage data on the extent of the damage sustained in each of the one or more areas.

32. The method as set forth in claim 25 further comprising retrieving, by the appraisal management computing apparatus, the one or more images or videos of the property from an imaging device.

33. A non-transitory computer readable medium having stored thereon instructions for improving an automated review of a damage appraisal executable code which when executed by a processor, causes the processor to perform steps that comprising:
obtaining an initial generated data list for a previously prepared damage appraisal for a property;
analyzing one or more images of the property associated with the prepared damage appraisal using a deep neural network with multiple hidden layers of units between an input and output which has knowledge encoded from vast quantities of earlier property damage images to identify which area of the property has damage;
determining damage data on an extent of the damage in the identified area of the property using the deep neural network which has knowledge encoded from vast quantities of earlier property damage images;
mapping the identified area of the property with the damage to the appropriate labor operation to generate an automated list one or more repair lines to make a repair;
comparing the initial generated data list for the previously prepared damage appraisal against the automatically generated data list to identify any differences; and
providing any of the identified differences between the initial generated data list and the automatically generated data list.

34. The medium as set forth in claim 33 wherein the analyzing the one or more images of the property further comprises:
qualifying the one or more images to eliminate any which are not of the property; and
determining which of the qualified images of the property depict damage;
wherein the analyzing analyzes the one or more qualified images of the property which depict analyzing one or more images of property using the deep neural network which has stored knowledge data encoded from one or more stored property damage images to identify which area of the property has damage.

35. The medium as set forth in claim 33 further comprising:
performing one or more calculations using rules of adjacency to add any of the one or more parts or the one or more repair lines to make the repair in the generated data list determined to be additionally required; and
adjusting the generated data list based on any of the one or more parts or the one or more repair lines the performed one or more calculations using rules of adjacency indicated should be removed.

36. The medium as set forth in claim 33 further comprising:
utilizing prescriptive analytics and statistical models of historical stored repair data for the identified area of the property with the damage to detect any one or more anomalies in the generated data list of the one or more parts and the one or more repair lines to make the repair against; and
adjusting the generated data list based on any of the detected one or more anomalies.

37. The medium as set forth in claim 33 further comprising:
performing one or more calculations using a stored customer profile setting to adjust any of the one or more parts or the one or more repair lines to make the repair in the generated data list determined to the stored customer profile setting; and
adjusting the generated data list based on any of the one or more parts or the one or more repair lines the performed one or more calculations using the stored customer profile indicated the adjustment was required.

38. The medium as set forth in claim 33 further comprising obtaining identification data and property information data for the property, wherein the analyzing the one or more images, the determining the damage data and the mapping the identified area of the property with the damage are further based on the identification data and the property information data for the property.

39. The medium as set forth in claim 33 wherein the providing further comprises providing the identity of the property, an identification of one or more areas of the property which have sustained the damage, and the determined damage data on the extent of the damage sustained in each of the one or more areas.

40. The medium as set forth in claim 33 further comprising retrieving the one or more images or videos of the property from an imaging device.

41. A appraisal management computing apparatus comprising:
a processor; and
a memory coupled to the processor which is configured to be capable of executing programmed instructions stored in the memory to:
obtaining an initial generated data list for a previously prepared damage appraisal for a property;
analyze one or more images of the property associated with the prepared damage using a deep neural network with multiple hidden layers of units between an input and output which has knowledge encoded from vast quantities of earlier property damage images to identify which area of the property has damage;
determine damage data on an extent of the damage in the identified area of the property using the deep neural network which has knowledge encoded from vast quantities of earlier property damage images;
map the identified area of the property with the damage to one of a plurality of stored repair procedure templates or to an appropriate labor operation to generate an automated list of one or more parts and one or more repair lines to make a repair;
compare the initial generated data list for the previously prepared damage appraisal against the automatically generated data list to identify any differences; and
provide any of the identified differences between the initial generated data list and the automatically generated data list.

42. The apparatus as set forth in claim 41 wherein the processor coupled to the memory is further configured to be capable of executing at least one additional programmed instruction for the analyzing the one or more images stored in the memory to:
qualify the one or more images to eliminate any which are not of the property; and
determine which of the qualified images of the property depict damage;
wherein the analyzing analyzes the one or more qualified images of the property which depict using the deep neural network which has stored knowledge data encoded from one or more stored property damage images to identify which area of the property has damage.

43. The apparatus as set forth in claim 41 wherein the processor coupled to the memory is further configured to be capable of executing at least one additional programmed instruction for the analyzing the one or more images stored in the memory to:
perform one or more calculations using rules of adjacency to add any of the one or more parts or the one or more repair lines to make the repair in the generated data list determined to be additionally required; and
adjust the generated data list based on any of the one or more parts or the one or more repair lines the performed one or more calculations using rules of adjacency indicated should be removed.

44. The apparatus as set forth in claim 41 wherein the processor coupled to the memory is further configured to be capable of executing at least one additional programmed instruction for the analyzing the one or more images stored in the memory to:
utilize prescriptive analytics and statistical models of historical stored repair data for the identified area of the property with the damage to detect any one or more anomalies in the generated data list of the one or more parts and the one or more repair lines to make the repair against; and
adjust the generated data list based on any of the detected one or more anomalies.

45. The apparatus as set forth in claim 41 wherein the processor coupled to the memory is further configured to be capable of executing at least one additional programmed instruction for the analyzing the one or more images stored in the memory to:
perform one or more calculations using a stored customer profile setting to adjust any of the one or more parts or the one or more repair lines to make the repair in the generated data list determined to the stored customer profile setting; and
adjust the generated data list based on any of the one or more parts or the one or more repair lines the performed one or more calculations using the stored customer profile indicated the adjustment was required.

46. The apparatus as set forth in claim 41 wherein the processor coupled to the memory is further configured to be capable of executing at least one additional programmed instruction stored in the memory to obtain identification data and property information data for the property, wherein the analyzing the one or more images, the determining the damage data and the mapping the identified area of the property with the damage are further based on the identification data and the property information data for the property.

47. The apparatus as set forth in claim 41 wherein the processor coupled to the memory is further configured to be capable of executing at least one additional programmed instruction for the providing stored in the memory to provide the identity of the property, an identification of one or more areas of the property which have sustained the damage, and the determined damage data on the extent of the damage sustained in each of the one or more areas.

48. The apparatus as set forth in claim 41 wherein the processor coupled to the memory is further configured to be capable of executing at least one additional programmed instruction stored in the memory to retrieve the one or more images of the property from an imaging device.
